# EUROPEAN PATENT SPECIFICATION

(11) **EP 3 201 239 B1**
(45) Date of publication and mention of the grant of the patent: **03.07.2019**
(21) Application number: 15766518.3
(22) Date of filing: 22.09.2015
(51) Int. Cl.: C08F 4/649, C08F 10/00

(54) **CATALYST FOR THE POLYMERIZATION OF OLEFINS**
KATALYSATOR ZUR POLYMERISIERUNG VON OLEFINEN
CATALYSEUR POUR LA POLYMÉRISATION DES OLÉFINES

(30) Priority: 02.10.2014 EP 14187408
(43) Date of publication of application: 09.08.2017
(73) Proprietor: Basell Poliolefine Italia S.r.l., 20121 Milano (IT)
(72) Inventor: BAITA, Pietro, I-44122 Ferrara (IT); DALL'OCCO, Tiziano, I-44122 Ferrara (IT); DI DIEGO, Maria, I-44122 Ferrara (IT); LIGUORI, Dario, I-44122 Ferrara (IT); MARTURANO, Lorella, I-44122 Ferrara (IT); MEI, Gabriele, I-44122 Ferrara (IT); MORINI, Giampiero, I-44122 Ferrara (IT); PICA, Roberta, I-44122 Ferrara (IT)
(74) Representative: Giberti, Stefano
(86) International application number: PCT/EP2015/071674
(87) International publication number: WO 2016/050555

(56) References cited:
- EP-A1- 0 529 977
- US-A1- 2005 239 636
- US-A1- 2011 207 901
- US-B1- 6 271 321

## Description

### FIELD OF THE INVENTION

The present disclosure relates to catalysts for the polymerization of olefins, in particular ethylene and its mixtures with olefins CH₂=CHR, wherein R is an alkyl, cycloalkyl or aryl radical having 1-12 carbon atoms, comprising a solid catalyst component comprising Ti, Mg, halogen and optionally an electron donor, an aluminum alkyl compound and halogenated esters as activity enhancers. The catalysts disclosed in the present application are suitably used in any olefin polymerization process to prepare olefin homo or copolymers.

### BACKGROUND OF THE INVENTION

The polymerization activity is a very important factor in any polymerization process. For a given catalyst system, it may depends on the polymerization conditions, such as temperature and pressure. However, once fixed the polymerization conditions the activity depends strictly on the catalyst system and when the activity is not satisfactory the amount of catalyst fed to the reactor must be increased or its residence time made longer. In any case, it is clear that the above solution penalize the plant operability for the economic point of view as the increase of catalyst fed means increase of the cost per unity of polymer produced, while the increase of the residence time means a lower productivity of the plant.

In view of this importance, the need of increase the catalyst activity is always felt. Particularly in the ethylene polymerization processes, where Ti-based Ziegler-Natta catalyst are generally used in combination with aluminum alkyls and hydrogen as molecular weight regulator, it is also felt the need of reducing the extent of ethane generation deriving from undesired ethylene hydrogenation. This side reaction in fact, leads to a unproductive consumption of ethylene fed as a polymerization monomer.

Halogenated compounds have been used in the past as activity improvers in association with coordination catalysts with contradictory results. Among various halogenated organic compounds, also halogenated esters have been used in association with unsupported titanium-based catalyst without obtaining significant increase in catalyst activity for olefin polymerization. In order to see a remarkable improvement in productivity EP618239B1 suggests the use of unsupported mixed Ti+V based catalyst is association with halogenated esters in the polymerization of ethylene carried out in solution at high temperatures. Independently from the activity, the use of an additional catalytic metal completely changes the polymer product properties to an extent that the requirements for certain final applications could not be met unless a completely new set of production recipe is developed and implemented. The effect on reduction of ethane generation is not mentioned.

### SUMMARY OF THE INVENTION

The applicant has found that a certain group of halogenated ester used in combination with Ti based catalyst supported on magnesium chloride are able to generate catalyst with increased activity and reduce the ethane generation when employed in the ethylene polymerization.

It is therefore an object of the present disclosure a catalyst system for the (co)polymerization of olefins, comprising (A) a solid catalyst component comprising a titanium compound supported on magnesium dichloride (B) an aluminum alkyl compound and (C) an halogenated organic ester of formula A-COOR in which R is a C₁-C₁₀ hydrocarbon group and A is a C₁-C₅ saturated or unsaturated hydrocarbon group in which at least one of the hydrogen atoms is replaced by chlorine.

### DETAILED DESCRIPTION OF THE INVENTION

In a preferred embodiment, the A group is a saturated linear hydrocarbon group having up to four carbon atoms. In a particularly preferred embodiment the chlorine atom replaces one or more hydrogen linked on the carbon atom in alpha position with respect to the carboxylic group. In a particularly preferred embodiment at least two atoms and more preferably at least three atoms of hydrogen are replaced by chlorine. Preferred example of esters are ethyl trichloroacetate, butyl perchlorocrotonate and 2-chloro propionate.

Preferably the R group is selected among C₁-C₅ linear alkyl groups.

The halogenated organic ester compound (C) is preferably used in amounts such as to give a molar ratio (C)/Ti (where Ti is the titanium molar amount within component (A)), ranging from 0.1 to 10, more preferably from 0.5 to 8 and especially from 1 to 6.

The preferred titanium compounds have the formula Ti(OR^{II})ₙX_{y-n}, wherein n is a number comprised between 0 and 0.5 inclusive, y is the valence of titanium, R^{II} is an alkyl, cycloalkyl or aryl radical having 1-8 carbon atoms and X is halogen. In particular R^{II} can be ethyl, isopropyl, n-butyl, isobutyl, 2-ethylhexyl, n-octyl and phenyl, (benzyl); X is preferably chlorine.

If y is 4, n varies preferably from 0 to 0.02; if y is 3, n varies preferably from 0 to 0.015. TiCl₄ is especially preferred.

The solid catalyst components (A) are preferably free from vanadium compounds. Components (A) may comprise an internal electron donor compound (internal donor), selected for example among ethers, esters, amines and ketones. The electron donor compound may be used in amount such as to give ED/Ti ratios from 0.1 to 8, preferably from 0.5 to 7 and more preferably from 1 to 6.

Preferred internal electron donor compounds are selected from esters of aliphatic or aromatic carboxylic acids such as phthalates, acetates, in particular ethylacetate, benzoates, alkoxybenzenes described in WO2011/015553, cyclic alkyl ethers such as tetrahydrofurane and diethers. Among them, ethyl acetate and tetrahydrofurane being the most preferred.

In addition to the above mentioned characteristics, the solid catalyst component (A) may show a porosity P_{F} (deriving from pores with radius up to 1 µ) determined with the mercury method ranging from 0.2 to 0.80 cm³/g and more preferably from 0.3 to 0.70 cm³/g usually in the range 0.35-0.60 cm³/g.

The surface area measured by the BET method is preferably lower than 80 and in particular comprised between 10 and 70 m²/g. The porosity measured by the BET method is generally comprised between 0.10 and 0.50, preferably from 0.10 to 0.40 cm³/g.

The particles of solid component have substantially spherical morphology and average diameter comprised between 5 and 150 µm, preferably from 20 to 100 µm and more preferably from 30 to 80 µm. As particles having substantially spherical morphology, those are meant wherein the ratio between the greater axis and the smaller axis is equal to or lower than 1.5 and preferably lower than 1.3.

A method suitable for the preparation of spherical components mentioned above comprises a step (a) in which a compound MgCl₂.mR^{III}OH, wherein 0.3 ≤ m ≤ 1.7 and R^{III} is an alkyl, cycloalkyl or aryl radical having 1-12 carbon atoms is reacted with the said titanium compound of the formula Ti(OR^{I})ₙX₄₋ₙ, in which n, y, X and R^{I} have the same meaning as already defined.

In this case MgCl₂.mR^{III}OH represents a precursor of Mg dihalide. These kind of compounds can generally be obtained by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034. Adducts having the desired final alcohol content can be obtained by directly using the selected amount of alcohol directly during the adduct preparation. However, if adducts with increased porosity are to be obtained it is convenient to first prepare adducts with more than 1.7 moles of alcohol per mole of MgCl₂ and then subjecting them to a thermal and/or chemical dealcoholation process. The thermal dealcoholation process is carried out in nitrogen flow at temperatures comprised between 50 and 150°C until the alcohol content is reduced to the value ranging from 0.3 to 1.7. A process of this type is described in EP 395083.

Generally these dealcoholated adducts are also characterized by a porosity (measured by mercury method) due to pores with radius up to 1µm ranging from 0.15 to 2.5 cm³/g preferably from 0.25 to 1.5 cm³/g.

In the reaction of step (a) the molar ratio Ti/Mg is stoichiometric or higher; preferably this ratio is higher than 3. Still more preferably a large excess of titanium compound is used. Preferred titanium compounds are titanium tetrahalides, in particular TiCl₄. The reaction with the Ti compound can be carried out by suspending the adduct in cold TiCl₄ (generally 0°C); the mixture is heated up to 80-140°C and kept at this temperature for 0.5-8 preferably from 0.5 to 3 hours. The excess of titanium compound can be separated at high temperatures by filtration or sedimentation and siphoning. The step (a) can be repeated twice or more. In cases of catalysts containing an electron donor compound, this latter can be added together with the titanium compound in the reaction system for reaction with the MgCl₂.mR^{III}OH adduct.

However, it constitute a preferred embodiment of the invention adding the internal electron donor compound separately in a further step after the completion of the reaction between the adduct and the titanium compound as described in WO2004/106388.

According to another variant of the process, before adding the internal electron donor, the solid catalyst component coming from the end of step (a) is subject to prepolymerization in the presence of aluminum alkyls, small amount of monomer and optionally an external donor as described in PCT/EP2014/061958.

The catalyst component (B) of the invention is selected from Al-alkyl compounds possibly halogenated. In particular, it is selected from Al-trialkyl compounds, for example Al-trimethyl, Al-triethyl, Al-tri-n-butyl, Al-triisobutyl are preferred. The Al/Ti ratio is higher than 1 and is generally comprised between 5 and 800.

The above-mentioned components (A)-(C) can be fed separately into the reactor where, under the polymerization conditions can exploit their activity. It may be advantageous to carry out a pre-contact of the above components, optionally in the presence of small amounts of olefins, for a period of time ranging from 0.1 to 120 minutes preferably in the range from 1 to 60 minutes. The pre-contact can be carried out in a liquid diluent at a temperature ranging from 0 to 90°C preferably in the range of 20 to 70°C.

The so formed catalyst system can be used directly in the main polymerization process or alternatively, it can be pre-polymerized beforehand. A pre-polymerization step is usually preferred when the main polymerization process is carried out in the gas phase and a pre-polymerization has not yet occurred in the preparation of the solid catalyst component A. The pre-polymerization can be carried out with any of the olefins CH₂=CHR, where R is H or a C₁-C₁₀ hydrocarbon group. In particular, it is especially preferred to pre-polymerize ethylene, propylene or mixtures thereof with one or more α-olefins, said mixtures containing up to 20% in moles of α-olefin, forming amounts of polymer from about 0.1 g per gram of solid component up to about 1000 g per gram of solid catalyst component. The pre-polymerization step can be carried out at temperatures from 0 to 80°C, preferably from 5 to 70°C, in the liquid or gas phase. The pre-polymerization step can be performed in-line as a part of a continuous polymerization process or separately in a batch process. The batch pre-polymerization of the catalyst of the invention with ethylene in order to produce an amount of polymer ranging from 0.5 to 20 g per gram of catalyst component is particularly preferred. The pre-polymerized catalyst component can also be subject to a further treatment with a titanium compound before being used in the main polymerization step. In this case the use of TiCl₄ is particularly preferred. The reaction with the Ti compound can be carried out by suspending the prepolymerized catalyst component in the liquid Ti compound optionally in mixture with a liquid diluent; the mixture is heated to 60-120°C and kept at this temperature for 0.5-2 hours.

The catalysts of the invention can be used in any kind of polymerization process both in liquid and gas-phase processes. Such processes are carried out at a temperature ranging from 60 to 130°C preferably from 70 to 110 °C. Catalysts having small particle size, (less than 40µm) are particularly suited for slurry polymerization in an inert medium, which can be carried out continuously stirred tank reactor or in loop reactors. Catalysts having larger particle size are particularly suited for gas-phase polymerization processes which can be carried out in agitated or fluidized bed gas-phase reactors.

A particularly preferred gas-phase process for the polymerization of olefins, comprises the following steps in any mutual order:
a) polymerizing ethylene, optionally together with one or more comonomers, in a gas-phase reactor in the presence of hydrogen;
b) copolymerizing ethylene with one or more comonomers in another gas-phase reactor in the presence of an amount of hydrogen less than step a);
where in at least one of said gas-phase reactors the growing polymer particles flow upward through a first polymerization zone (riser) under fast fluidization or transport conditions, leave said riser and enter a second polymerization zone (downcomer) through which they flow downward under the action of gravity, leave said downcomer and are reintroduced into the riser, thus establishing a circulation of polymer between said two polymerization zones. In the first polymerization zone (riser), fast fluidization conditions are established by feeding a gas mixture comprising one or more olefins (ethylene and comonomers) at a velocity higher than the transport velocity of the polymer particles. The velocity of said gas mixture is preferably comprised between 0.5 and 15 m/s, more preferably between 0.8 and 5 m/s. The terms "transport velocity" and "fast fluidization conditions" are well known in the art; for a definition thereof, see, for example, "D. Geldart, Gas Fluidisation Technology, page 155 et seq. , J. Wiley & Sons Ltd. , 1986".

In the second polymerization zone (downcomer), the polymer particles flow under the action of gravity in a densified form, so that high values of density of the solid are reached (mass of polymer per volume of reactor), which approach the bulk density of the polymer. In other words, the polymer flows vertically down through the downcomer in a plug flow (packed flow mode), so that only small quantities of gas are entrained between the polymer particles.

It is a particularly preferred embodiment of the present application carrying out a gas-phase process for the homo or copolymerization of ethylene in the presence of a catalyst system for the (co)polymerization of olefins, comprising (A) a solid catalyst component comprising a titanium compound supported on magnesium dichloride (B) an aluminum alkyl compound and (C) an halogenated organic ester of formula A-COOR in which R is a C₁-C₁₀ hydrocarbon group and A is a C₁-C₅, saturated or unsaturated hydrocarbon group in which at least one of the hydrogen atoms is replaced by chlorine and in which the halogenated organic ester compound (C) is used in amounts such as to give a molar ratio (C)/Ti (where Ti is the titanium molar amount within component (A)), ranging from 0.1 to 10. In particular, it has been found that the use of the compound (C) in the gas-phase polymerization process allows to obtain a reduced amount of ethane generation due to the hydrogenation of ethylene which is preferably the range of less than 3.8 Kg ethane/ton PE, preferably less than 3.5Kg ethane/ton PE.

In addition to the ethylene homo and copolymers mentioned above the catalysts of the present invention are also suitable for preparing very-low-density and ultra-low-density polyethylenes (VLDPE and ULDPE, having a density lower than 0.920g/cm³, to 0.880 g/cm³) consisting of copolymers of ethylene with one or more alpha-olefins having from 3 to 12 carbon atoms, having a mole content of units derived from ethylene of higher than 80%; elastomeric copolymers of ethylene and propylene and elastomeric terpolymers of ethylene and propylene with smaller proportions of a diene having a content by weight of units derived from ethylene of between about 30 and 70%.

The following examples are given in order to further describe the present invention.

### EXAMPLES

### CHARACTERIZATIONS

The properties are determined according to the following methods:

| | |
|---|---|
| MIE flow index: | ASTM-D 1238 condition E |
| MIF flow index: | ASTM-D 1238 condition F |
| MIP flow index: | ASTM D 1238 condition P |
| Bulk density: | DIN-53194 |

Porosity and surface area with nitrogen: are determined according to the B.E.T. method (apparatus used SORPTOMATIC 1900 by Carlo Erba).

### Porosity and surface area with mercury:

The measure is carried out using a "Pascal 240" series porosimeter by Carlo Erba.
The porosity is determined by intrusion of mercury under pressure. For this determination use is made of a calibrated dilatometer (capillary diameter 3 mm) CD3P (by Carlo Erba) connected to a reservoir of mercury and to a high-vacuum pump. A weighed amount of sample is placed in the dilatometer. The apparatus is then placed under high vacuum (<0.1 mm Hg) and is maintained in these conditions for 20 minutes. The dilatometer is then connected to the mercury reservoir and the mercury is allowed to flow slowly into it until it reaches the level marked on the dilatometer at a height of 10 cm. The valve that connects the dilatometer to the vacuum pump is closed and then the mercury pressure is gradually increased with nitrogen up to 140 kg/cm2. Under the effect of the pressure, the mercury enters the pores and the level goes down according to the porosity of the material.

The porosity (cm³/g) (for supports and catalysts only deriving from pores up to 1µm) and the pore distribution curve, are directly calculated from the integral pore distribution curve, which is function of the volume reduction of the mercury and applied pressure values (all these data are provided and elaborated by the porosimeter associated computer which is equipped with a dedicated Pascal software supplied by C. Erba.

### [General procedure for the HDPE polymerization test

### Ethylene Polymerization in iso-hexane solvent

A 4.5-liter stainless-steel autoclave equipped with a magnetic stirrer, temperature and pressure indicator, feeding line for iso-hexane, ethylene, and hydrogen, was used and purified by fluxing pure nitrogen at 70°C for 60 minutes. Then, a solution of 1550 cm³ of iso-hexane containing 5.00 cm³ of 8 % by wt/vol TEAL/iso-hexane was introduced at a temperature of 30°C under nitrogen flow. In a separate 200 cm³ round bottom glass bottle were successively introduced, 50 cm³ of anhydrous iso-hexane, 1.25 cm³ of 8 % by wt/vol, TEAL/iso-hexane solution, 0.020÷0.030 grams of the solid catalyst as prepared in example 1 and the amount of promoter reported in table 1. They were mixed together, aged 10 minutes at room temperature and introduced under nitrogen flow into the reactor. The autoclave was closed, then the temperature was raised to 85°C, hydrogen (3 bars partial pressure) and ethylene (7.0 bars partial pressure) were added.

Under continuous stirring, the total pressure was maintained at 85°C for 120 minutes by feeding ethylene. At the end the reactor was depressurized and the temperature was dropped to 30°C.
The recovered polymer was dried at 40°C under vacuum and analyzed.

### EXAMPLES 1-3 and COMPARATIVE 1

### Procedure for the preparation of the solid catalyst component (A)

A magnesium chloride and alcohol adduct containing about 3 mols of alcohol was prepared following the method described in example 2 of USP 4,399,054, but working at 2000 RPM instead of 10000 RPM. The adduct were subject to a thermal treatment, under nitrogen stream, over a temperature range of 50-150 °C until a weight content of 25% of alcohol was reached.

Into a 2 L four-necked round flask, purged with nitrogen, 1 L of TiCl₄ was introduced at 0°C. Then, at the same temperature, 70 g of a spherical MgCl₂/EtOH adduct containing 25 %wt of ethanol and prepared as described above were added under stirring. The temperature was raised to 140 °C in 2 h and maintained for 120 minutes. Then, the stirring was discontinued, the solid product was allowed to settle and the supernatant liquid was siphoned off. The solid residue was then washed once with heptane at 80°C and five times with hexane at 25°C and dried under vacuum at 30 °C.

Into a 260cm³ glass reactor provided with stirrer, 351.5 cm³ of hexane at 20°C and whilst stirring 7 g of the catalyst component prepared as described above were introduced at 20°C. Keeping constant the internal temperature, 5.6 cm³ of tri-n-octylaluminum (TNOA) in hexane (about 370 g/l) were slowly introduced into the reactor and the temperature was brought to 10°C. After 10 minutes stirring, 10 g of propylene were carefully introduced into the reactor at the same temperature during a time of 4 hours. The consumption of propylene in the reactor was monitored and the polymerization was discontinued when a theoretical conversion of 1g of polymer per g of catalyst was deemed to be reached. Then, the whole content was filtered and washed three times with hexane at a temperature of 30°C (50 g/l). After drying the resulting pre-polymerized catalyst (A) was analyzed and found to contain 1.05 g of polypropylene per g of initial catalyst,2.7%Ti, 8.94%Mg and 0.1%Al. The solid catalyst component (A) was employed in the ethylene polymerization according to the general procedure using the type and amount of promoter compound (C) reported in table 1 together with the polymerization results.

### EXAMPLES 4-9 and Comparative 2

### Preparation of the solid component (A)

A magnesium chloride and alcohol adduct containing about 3 mols of alcohol was prepared following the method described in example 2 of USP 4,399,054, but working at 2000 RPM instead of 10000 RPM. The adduct were subject to a thermal treatment, under nitrogen stream, over a temperature range of 50-150 °C until a weight content of 24.4% of alcohol was reached.

Into a 2 L four-necked round flask, purged with nitrogen, 1 L of TiCl₄ was introduced at 0°C. Then, at the same temperature, 70 g of a spherical MgCl₂/EtOH adduct containing 24.4 %wt of ethanol and prepared as described above were added under stirring. The temperature was raised to 130 °C in 2 h and maintained for 90 min. Then, the stirring was discontinued, the solid product was allowed to settle and the supernatant liquid was siphoned off. A new amount of fresh TiCl₄ was added to the flask, such to reach the initial liquid volume. The temperature was maintained at 130°C for 90 minutes. Again, the solid was allowed to settle, and the liquid was siphoned off. The solid was then washed three times with anhydrous iso-hexane (400 mL at each washing) at 60 °C and twice at 40°C.

At the end the residual solid was suspended in 600 mL of dry iso-hexane. At the same temperature, under stirring, 92 ml of Ethylacetate were added dropwise.

The temperature was raised to 50 °C and the mixture was stirred for 2 hours. Then, the stirring was discontinued, the solid product was allowed to settle and the supernatant liquid was siphoned off.

The solid was washed twice with anhydrous hexane (2 x 100 mL) at 40 °C, recovered, dried under vacuum and analyzed.

Mg= 15.0 %wt, Ti=2.4 wt%, AcOEt= 26.9 %wt

The solid catalyst component (A) was employed in the ethylene polymerization according to the general procedure using the type and amount of promoter compound (C) reported in table 1 together with the polymerization results.

### Example 10 and comparative example 3

The catalyst (A) according to example 4 was used in the gas-phase polymerization of ethylene according to the following procedure. A gas phase polymerization of ethylene is carried out in a small scale fluidized bed reactor, equipped with automated pressure and temperature control. The solid catalyst (about 0.140 g) is precontacted in hexane slurry at room temperature with triethyl aluminum (TEA) and THF (Al/THF = 25 molar ratio). The mixture was then heated to 50°C for 1 hour under continuous stirring. The precontact-slurry is then discharged into the gas phase reactor that was prepared at the desired conditions before.
The gas phase reactor is maintained at a temperature of 80°C, and at a pressure of 24 barg. The gas phase is composed of ethylene, 10 mol%, hydrogen, 10 mol%, and propane 80 mol%. After the introduction of the precontacted catalyst into the reactor (that initially does not contain any polymer bed), ethylene is continuously fed in order to maintain constant the reactor pressure during the polymerization test. After two hours, the ethylene is stopped, and the polymer bed, formed during the polymerization run, is discharged into a degassing vessel. The polymer is recovered and additionally degassed under vacuum.
The results are reported in table 2.

**TABLE 1**

| EX. | Comp. C | C/Ti (mol Ratio) | Activity (Kg/g) | MIE (dg/min) | MIF/MIE | B.D. (g/cm³) |
|---|---|---|---|---|---|---|
| Comp.1 | - | - | 18.6 | 0.34 | 33.2 | 0.189 |
| 1 | Cl₃C-COOEt | 2.19 | 19.9 | 0.25 | 33.8 | 0.194 |
| 2 | " | 4 | 21.5 | - | - | - |
| 3 | " | 8.4 | 22.6 | 0.45 | 32.9 | 0.209 |
| Comp. 2 | - | - | 9.7 | 0.38 | 31.6 | 0.335 |
| 4 | Cl₃C-COOEt | 4.1 | 13.3 | 0.82 | 31.8 | 0.330 |
| 5 | " | 3.7 | 14.7 | 0.70 | 29.0 | 0.339 |
| 6 | " | 7.2 | 14.7 | 0.92 | 29.9 | 0.36 |
| 7 | BPCC | 4 | 15.9 | 0.98 | 30.6 | 0.332 |
| 8 | " | 6.2 | 14.0 | 1.8 | 30.1 | 0.281 |
| 9 | CH₃CHCl-COOEt | 4.0 | 14.4 | 0.41 | 30.7 | 0.346 |

| | | | | | | |
|---|---|---|---|---|---|---|
| BPCC= Cl₃C-CH=C(CH₃)COOBu | | | | | | |

**TABLE 2**

| EX. | Comp. C | C/Ti (mol Ratio) | Activity (Kg/g/bar C₂/h) | MIE (dg/min) | MIF/MIE | B.D. (g/cm³) |
|---|---|---|---|---|---|---|
| Comp.3 | - | - | 1.13 | 2.9 | 27.2 | 0.404 |
| 10 | Cl₃C-COOEt | 4.2 | 1.30 | 2.7 | 29.2 | 0.402 |

### EXAMPLE 11

The polymerization process was carried out in a plant working continuously and basically equipped with a small reactor (pre-contacting pot) in which the catalyst components are mixed to form the catalytic system, a second transit vessel receiving the catalytic system formed in the previous reactor and one fluidized bed reactor (*polymerization reactors*) kept under fluidization conditions with propane receiving the catalyst mixture coming from the previous reactor.

The following reactants are fed to the pre-contacting pot:
- the solid catalyst component prepared as described in example 1
- liquid propane as diluent
- a solution of TIBAL

The so obtained catalytic system was fed from the pre-contacting section (first vessel) to the second vessel and then to the gas-phase fluidized bed reactor together monomer feed, antistatic agent (glycerol monostearate) and a hexane solution of activity improver operated under the conditions reported in Table 3 . The polymer discharged from the final reactor was first transferred to the steaming section and then dried at 70°C under a nitrogen flow and weighted. The polymer properties are reported in Table 3.

**Table 3**

| EXAMPLE | | | 11 |
|---|---|---|---|
| **PCPs** | T | °C | 40 |
| | Alkyl Type | - | TIBAL |
| | Alk/cat | g/g | 2 |
| | Alk/THF | g/g | |
| | | | |
| **Product (FBR)** | T | °C | 80 |
| | P | bar | 27 |
| | Antistatic (AA) type | | GMS |
| | AA /polymer | ppm wt | 147 |
| | Cl₃C-COOEt/Ti | mol/mol | 1.6 |
| | C₂⁻ | % | 10.7 |
| | H₂/C₂⁻ | - | 2.5 |
| | C₂⁺/PE | kg/ton PE | 2.3 |
| | Mileage | g/g | 3867 |
| | MIE | g/10' | 158.0 |
| | PBD | g/cc | 0.481 |

### EXAMPLE 12-13 and comparative example 4

The polymerization process was carried out in the same apparatus described in Example 11 with the difference that the catalyst prepared according to example 1 of PCT/EP2014/061958 was used in combination with tetrahydrofurane as external donor. Atmer 163 was used as an antistatic instead of GMS. Polymerization conditions and results are reported in table 4.

**Table 4**

| EXAMPLE | | | Comp.4 | 12 | 13 |
|---|---|---|---|---|---|
| **PCPs** | T | °C | 50+50 | 50 | 50 |
| | Alkyl Type | - | TEAL | TEAL | TEAL |
| | Alk/cat | g/g | 3.0 | 3.0 | 3.0 |
| | Alk/THF | g/g | 44.0 | 44.0 | 44.0 |
| | | | | | |
| **FBR** | T | °C | 80 | 80 | 80 |
| | P | bar | 27 | 27 | 27 |
| | Antistatic (AA) type | | ATMER | ATMER | ATMER |
| | AA /prod | ppm wt | 102 | 90 | 90 |
| | Cl₃C-COOEt/Ti | mol/mol | - | 2.8 | 1.17 |
| | C₂⁻ | % | 15.5 | 15.5 | 15.5 |
| | H₂/C₂⁻ | - | 2.7 | 2.4 | 2.6 |
| | C₂+/PE | kg/ton PE | 3.9 | 0.9 | 3.4 |
| | Spec.Mil. | g/g.bar.h | 302 | 399 | 388 |
| | MIE | g/10' | 84.0 | 94.0 | 88.0 |
| | PBD | g/cc | 0.408 | 0.426 | 0.425 |

### EXAMPLE 14-15 and comparative example 5

The polymerization process was carried out in the same apparatus described in Example 10 with the difference that in the second vessel prepolymerization of the catalyst prepared according to Example 4 occurred according to the conditions reported in Table 5.

**Table 5**

| EXAMPLE | | | Comp.5 | 14 | 15 |
|---|---|---|---|---|---|
| **PCPs** | T | °C | 60 | 60 | 60 |
| | tau | min | 29 | 29 | 29 |
| | Alkyl Type | - | TEAL | TEAL | TEAL |
| | Alk/cat | g/g | 6.0 | 6.0 | 6.0 |
| | Alk/THF | g/g | 44.0 | 44.0 | 44.0 |
| PREPOLY | T | °C | 60 | 60 | 60 |
| | C₂⁻ feed/CAT | g/g | 11 | 11 | 11 |
| | H₂/C₂⁻ | Mol. Ratio | 0.25 | 0.25 | 0.25 |
| | IV | dl/g | 1.12 | 0.94 | n.a. |
| | | | | | |
| **FBR** | T | °C | 80 | 80 | 80 |
| | P | bar | 24 | 24 | 24 |
| | Antistatic (AA) type | | ATMER | ATMER | ATMER |
| | AA /prod | ppm wt | 101 | 114 | 119 |
| | Cl₃C-COOEt/Ti | mol/mol | - | 4.1 | 2.8 |
| | C₂⁻ | % | 14.2 | 14.5 | 13.9 |
| | H₂/C₂⁻ | - | 2.1 | 2.1 | 1.9 |
| | C₂⁺/PE | kg/ton PE | 5.9 | 3.2 | 2.4 |
| | Spec.Mil. | g/g.bar.h | 476 | 571 | 680 |
| | MIE | g/10' | 80.0 | 87.0 | 78.0 |
| | PBD | g/cc | 0.484 | 0.475 | 0.477 |

As evidenced by the above examples the halogenated esters provide enhanced catalyst activity and reduced ethane (C₂⁺) generation.

## Claims

1. A catalyst system for the (co)polymerization of olefins, comprising (A) a solid catalyst component comprising a titanium compound supported on magnesium dichloride (B) an aluminum alkyl compound and (C) an halogenated organic ester of formula A-COOR in which R is a C₁-C₁₀ hydrocarbon group and A is a C₁-C₅ saturated or unsaturated hydrocarbon group in which at least one of the hydrogen atoms is replaced by chlorine.

2. Catalyst system according to claim 1 in which the A group is a saturated linear hydrocarbon group having up to four carbon atoms.

3. Catalyst system according to claim 1 in which the chlorine atom replaces one or more hydrogen linked on the carbon atom in alpha position with respect to the carboxylic group.

4. Catalyst system according to claim 1 in which at least two atoms of hydrogen are replaced by chlorine.

5. Catalyst system according to claim 1 in which R group is selected among C₁-C₅ linear alkyl groups.

6. Catalyst system according to claim 5 in which the compound (C) is ethyl trichloroacetate.

7. Catalyst system according to claim 1 in which the halogenated organic ester (C) is used in amounts such as to give a molar ratio (C)/Ti ranging from 0.1 to 10, where Ti is the titanium molar amount within component (A).

8. Catalyst system according to claim 7 in which the (C)/Ti molar ratio ranges from 0.5 to 8.

9. Process for the preparation of olefin (co)polymer carried out by polymerizing olefins in the presence of a catalyst system comprising (A) a solid catalyst component comprising a titanium compound supported on magnesium dichloride (B) an aluminum alkyl compound and (C) an halogenated organic ester of formula A-COOR in which R is a C₁-C₁₀ hydrocarbon group and A is a C₁-C₅ saturated or unsaturated hydrocarbon group in which at least one of the hydrogen atoms is replaced by chlorine.

10. Process according to claim 9 in which the olefin is ethylene and the process is carried out in gas-phase.

11. Process according to claim 9 in which the (C)/Ti molar ratio ranges from 3.5 to 10.

12. A process according to claim 9 comprising the following steps in any mutual order:
a) polymerizing ethylene, optionally together with one or more comonomers, in a gas-phase reactor in the presence of hydrogen;
b) copolymerizing ethylene with one or more comonomers in another gas-phase reactor in the presence of an amount of hydrogen lower than that in step a);
where in at least one of said gas-phase reactors the growing polymer particles flow upward through a first polymerization zone (riser) under fast fluidization or transport conditions, leave said riser and enter a second polymerization zone (downcomer) through which they flow downward under the action of gravity, leave said downcomer and are reintroduced into the riser, thus establishing a circulation of polymer between said two polymerization zones.

13. A gas-phase process for the preparation of polyethylene (PE) generating less than 3.8 Kg ethane per ton of PE comprising (co)polymerizing ethylene optionally together with one or more comonomers, in the presence of hydrogen and a catalyst system comprising (A) a solid catalyst component comprising a titanium compound supported on magnesium dichloride (B) an aluminum alkyl compound and (C) an halogenated organic ester of formula A-COOR in which R is a C₁-C₁₀ hydrocarbon group and A is a C₁-C₅ saturated or unsaturated hydrocarbon group in which at least one of the hydrogen atoms is replaced by chlorine.

## Patentansprüche

1. Katalysatorsystem zur (Co)polymerisation von Olefinen, umfassend (A) eine feste Katalysatorkomponente, die eine Titanverbindung umfasst, die auf Magnesiumdichlorid geträgert ist, (B) eine Aluminiumalkylverbindung und (C) einen halogenierten organischen Ester mit der Formel A-COOR, in der R eine C₁- bis C₁₀-Kohlenwasserstoffgruppe ist, und A eine gesättigte oder ungesättigte C₁- bis C₅-Kohlenwasserstoffgruppe ist, in der mindestens eines der Wasserstoffatome durch Chlor ersetzt ist.

2. Katalysatorsystem nach Anspruch 1, wobei die Gruppe A eine gesättigte lineare Kohlenwasserstoffgruppe mit bis zu vier Kohlenstoffatomen ist.

3. Katalysator nach Anspruch 1, wobei das Chloratom ein oder mehrere Wasserstoffe ersetzt, die an das Kohlenstoffatom in alpha-Position in Bezug auf die Carboxylgruppe gebunden sind.

4. Katalysatorsystem nach Anspruch 1, wobei mindestens zwei Wasserstoffatome durch Chlor ersetzt sind.

5. Katalysatorsystem nach Anspruch 1, wobei die Gruppe R ausgewählt ist aus linearen C₁-bis C₅-Alkylgruppen.

6. Katalysatorsystem nach Anspruch 5, wobei die Verbindung (C) Ethyltrichloracetat ist.

7. Katalysatorsystem nach Anspruch 1, wobei der halogenierte organische Ester (C) in Mengen verwendet wird, um ein Molverhältnis (C)/Ti im Bereich von 0,1 bis 10 zu ergeben, wobei Ti die molare Menge an Titan in Komponente (A) ist.

8. Katalysatorsystem nach Anspruch 7, wobei das Molverhältnis von (C)/Ti im Bereich von 0,5 bis 8 liegt.

9. Verfahren zur Herstellung von Olefin(co)polymer, das durch Polymerisieren von Olefinen in Gegenwart eines Katalysatorsystems durchgeführt wird, das (A) eine feste Katalysatorkomponente, die eine Titanverbindung umfasst, die auf Magnesiumdichlorid geträgert ist, (B) eine Aluminiumalkylverbindung und (C) einen halogenierten organischen Ester mit der Formel A-COOR umfasst, in der R eine C₁- bis C₁₀-Kohlenwasserstoffgruppe ist, und A eine gesättigte oder ungesättigte C₁- bis C₅-Kohlenwasserstoffgruppe ist, in der mindestens eines der Wasserstoffatome durch Chlor ersetzt ist.

10. Verfahren nach Anspruch 9, wobei das Olefin Ethylen ist, und das Verfahren in der Gas-phase durchgeführt wird.

11. Verfahren nach Anspruch 9, wobei das Molverhältnis von (C)/Ti im Bereich von 3,5 bis 10 liegt.

12. Verfahren nach Anspruch 9, umfassend die folgenden Schritte in beliebiger Reihenfolge:
a) Polymerisieren von Ethylen, gegebenenfalls zusammen mit einem oder mehreren Comonomeren, in einem Gasphasenreaktor in Gegenwart von Wasserstoff;
b) Copolymerisieren von Ethylen mit einem oder mehreren Comonomeren in einem anderen Gasphasenreaktor in Gegenwart einer Menge an Wasserstoff, die geringer als diejenige in Schritt a) ist;
wobei in mindestens einem der Gasphasenreaktoren die wachsenden Polymerpartikel durch eine erste Polymerisationszone (Steigrohr) unter schnellen Verwirbelungs- oder Transportbedingungen aufwärts fließen, das Steigrohr verlassen und in eine zweite Polymerisationszone (Fallrohr) eintreten, durch die sie unter Einwirkung der Schwerkraft abwärts fließen, das Fallrohr verlassen und wieder in das Steigrohr eingebracht werden, wodurch ein Polymerkreislauf zwischen den beiden Polymerisationszonen etabliert wird.

13. Gasphasenverfahren zur Herstellung von Polyethylen (PE), wobei weniger als 3,8 Kg Ethan pro Tonne PE generiert werden, umfassend (Co)polymerisieren von Ethylen, gegebenenfalls zusammen mit einem oder mehreren Comonomeren, in Gegenwart von Wasserstoff und einem Katalysatorsystem, das (A) eine feste Katalysatorkomponente, die eine Titanverbindung umfasst, die auf Magnesiumdichlorid geträgert ist, (B) eine Aluminiumalkylverbindung und (C) einen halogenierten organischen Ester mit der Formel A-COOR umfasst, in der R eine C₁- bis C₁₀-Kohlenwasserstoffgruppe ist, und A eine gesättigte oder ungesättigte C₁- bis C₅-Kohlenwasserstoffgruppe ist, in der mindestens eines der Wasserstoffatome durch Chlor ersetzt ist.

## Revendications

1. Système catalytique pour la (co)polymérisation d'oléfines, comprenant (A) un constituant catalytique solide comprenant un composé de titane supporté sur du dichlorure de magnésium, (B) un composé d'alkylaluminium et (C) un ester organique halogéné de formule A-COOR, dans laquelle R représente un groupe hydrocarboné en C₁-C₁₀ et A représente un groupe hydrocarboné saturé ou insaturé en C₁-C₅, dans lequel au moins l'un des atomes d'hydrogène est remplacé par du chlore.

2. Système catalytique selon la revendication 1, dans lequel le groupe A représente un groupe hydrocarboné linéaire saturé comprenant jusqu'à quatre atomes de carbone.

3. Système catalytique selon la revendication 1, dans lequel l'atome de chlore remplace un ou plusieurs hydrogènes liés sur l'atome de carbone en position alpha par rapport au groupe carboxylique.

4. Système catalytique selon la revendication 1, dans lequel au moins deux atomes d'hydrogène sont remplacés par du chlore.

5. Système catalytique selon la revendication 1, dans lequel un groupe R est choisi parmi des groupes alkyle linéaires en C₁-C₅.

6. Système catalytique selon la revendication 5, dans lequel le composé (C) est le trichloroacétate d'éthyle.

7. Système catalytique selon la revendication 1, dans lequel l'ester organique halogéné (C) est utilisé en des quantités qui permettent d'obtenir un rapport molaire (C)/Ti situé dans une plage allant de 0,1 à 10, où Ti est la quantité molaire de titane dans le constituant (A).

8. Système catalytique selon la revendication 7, dans lequel le rapport molaire (C)/Ti est situé dans une plage allant de 0,5 à 8.

9. Procédé de préparation d'un (co)polymère oléfinique effectué par polymérisation d'oléfines en présence d'un système catalytique comprenant (A) un constituant catalytique solide comprenant un composé de titane supporté sur du dichlorure de magnésium, (B) un composé d'alkylaluminium et (C) un ester organique halogéné de formule A-COOR, dans laquelle R représente un groupe hydrocarboné en C₁-C₁₀ et A représente un groupe hydrocarboné saturé ou insaturé en C₁-C₅, dans lequel au moins l'un des atomes d'hydrogène est remplacé par du chlore.

10. Procédé selon la revendication 9, dans lequel l'oléfine est l'éthylène et le procédé est effectué en phase gazeuse.

11. Procédé selon la revendication 9, dans lequel le rapport molaire (C)/Ti est situé dans une plage allant de 3,5 à 10.

12. Procédé selon la revendication 9 comprenant les étapes suivantes, dans n'importe quel ordre mutuel :
a) polymérisation d'éthylène, éventuellement avec un ou plusieurs comonomères, dans un réacteur à phase gazeuse en présence d'hydrogène ;
b) copolymérisation de l'éthylène avec un ou plusieurs comonomères dans un autre réacteur à phase gazeuse en présence d'une quantité d'hydrogène inférieure à celle de l'étape a) ;
où, dans au moins l'un desdits réacteurs à phase gazeuse, les particules de polymère en croissance s'écoulent vers le haut à travers une première zone de polymérisation (colonne ascendante) dans des conditions de fluidisation ou de transport rapides, quittent ladite colonne ascendante et entrent dans une deuxième zone de polymérisation (colonne descendante), à travers laquelle ils s'écoulent vers le bas sous l'action de la gravité, quittent ladite colonne descendante et sont réintroduites dans la colonne ascendante, établissant ainsi une circulation de polymère entre lesdites deux zones de polymérisation.

13. Procédé en phase gazeuse pour la préparation de polyéthylène (PE) générant moins de 3,8 kg d'éthane par tonne de PE, comprenant la (co)polymérisation d'éthylène, éventuellement avec un ou plusieurs comonomères, en présence d'hydrogène et d'un système catalytique comprenant (A) un constituant catalytique solide comprenant un composé de titane supporté sur du dichlorure de magnésium, (B) un composé d'alkylaluminium et (C) un ester organique halogéné de formule A-COOR, dans laquelle R représente un groupe hydrocarboné en C₁-C₁₀ et A représente un groupe hydrocarboné saturé ou insaturé en C₁-C₅, dans lequel au moins l'un des atomes d'hydrogène est remplacé par du chlore.
